# EUROPÄISCHE PATENTSCHRIFT

(11) **EP 0 781 985 B1**
(45) Veröffentlichungstag und Bekanntmachung des Hinweises auf die Patenterteilung: **04.04.2001**
(21) Anmeldenummer: 96118854.7
(22) Anmeldetag: 25.11.1996
(51) Int. Cl.: G01N 13/02, G01N 15/14, B07C 5/342

(54) **Verfahren und Anordnung zur Überwachung eines abreissenden Flüssigkeitsstrahls**
Method and device for the observation of drop formation at the break-off point in a liquid jet
Méthode et dispositif pour l'observation de la formation de gouttes à partir d'un jet de liquide

(30) Priorität: 28.12.1995 DE 19549015
(43) Veröffentlichungstag der Anmeldung: 02.07.1997
(73) Patentinhaber: SIEMENS AKTIENGESELLSCHAFT, 80333 München (DE); GSF-Forschungszentrum für Umwelt und Gesundheit GmbH, 85758 Oberschleissheim (DE)
(72) Erfinder: Karls, Ingolf, Dr., 85622 Feldkirchen (DE); Ellwart, Joachim, Dr., 80798 München (DE)
(74) Vertreter: Zedlitz, Peter, Dipl.-Inf.

(56) Entgegenhaltungen:
- EP-A- 0 025 296
- WO-A-96/12172
- US-A- 4 317 520
- US-A- 4 361 400
- US-A- 4 487 320
- US-A- 5 700 692
- L A HERZENBERG ET AL.: "Fluorescence activated cell sorting" SCIENTIFIC AMERICAN., Bd. 234, Nr. 3, März 1976, NEW YORK US, Seiten 108-117, XP002063591

## Beschreibung

Bei Vorgängen in der Chemie, Biologie und Medizin spielen häufig abreißende Flüssigkeitstrahlen eine große Rolle. Oft werden dort bei Analysen und hochgenauen Trenn- und Dosiervorgängen hochverdünnte Lösungen mittels Düsen, Pipetten oder anderen Gerätschaften fein dosiert. Auch beim Sortieren von Partikeln, z.B. Zellen aus Lebewesen, mit Hilfe von Zellsortern, spielen abreißende Flüssigkeitstrahlen eine große Rolle, was in "Herzenberg LA, Sweet RG, Herzenberg LA: Flourescence-activated cell sorting. Sci Amer 234(3):108, Mar. 1976" beschrieben ist. Aus den US Patenten, Lombardo et al., 4,317,520, und Gray et al., 4,361,400, sind jeweils solche Zellsorter bekannt.

Aus diesen Gründen besteht der dringende Wunsch, solche Flüssigkeitstrahlen bezüglich ihrer äußeren Parameter, d. h. Tropfgeschwindigkeit, Tropfengröße, Tropfenabstand, Lage des Abrißpunkts und ihrer Regelmäßigkeit automatisiert überwachen zu können.

Derzeit sind keine Vorrichtungen und Verfahren bekannt, die eine solche automatische Überwachung gewährleisten.

Die der Erfindung zugrundeliegende Aufgabe besteht deshalb darin, eine Anordnung und ein Verfahren anzugeben, womit ein abreißender Flüssigkeitstrahl automatisiert überwacht werden kann.

Diese Aufgabe wird für die Anordnung gemäß den Merkmalen des Patentanspruches 1 und für das Verfahren gemäß den Merkmalen des Patentanspruches 9 gelöst. Weiterbildungen der Erfindung ergeben sich aus den abhängigen Ansprüchen.

Ein besonderer Vorteil der erfindungsgemäßen Anordnung besteht darin, daß sie auf die Position des Abrißpunktes abstellt und durch geeignete Auswertemittel sicherstellt, daß der Abrißpunkt nicht über einen einstellbaren Grenzwert hinaus seine Position variieren kann. Sollte dies doch geschehen, so wird vorteilhaft automatisch ein Aktionsmittel in Gang gesetzt.

Besonders vorteilhaft wird bei der erfindungsgemäßen Anordnung die Position des Abrißpunkts mittels einer Kamera überwacht, da sich davon leicht Standbilder anfertigen lassen und so für die Auswertung der Position des Abrißpunkts mehr Zeit zur Verfügung steht.

Besonders vorteilhaft wird die Auswertung bei der erfindungsgemäßen Anordnung durch einen Rechner durchgeführt, da dieser Rechner bei Feststellen einer Überschreitung des Grenzwertes durch ein geeignetes Interface praktisch ohne Zeitverzögerung die Aktionsmittel in Gang setzen kann.

Ein entscheidender Vorteil des Verfahrens besteht darin, daß kein Personal durch die Beobachtung gebunden wird.

Besonders vorteilhaft läßt sich die Auswertung des gespeicherten Kamerabildes mit Hilfe der vorhandenen Pixelinformation durchführen, denn bei abreißenden Flüssigkeitstrahlen handelt es sich um geometrisch recht einfache Grundstrukturen, bei denen der Bildinformationsgehalt durch geeignete Maßnahmen auf das Wesentliche reduziert werden kann und damit der Auswerteaufwand durch den Rechner wesentlich vereinfacht werden kann. Besonders vorteilhaft läßt sich hierfür die Pixelstruktur, d. h. der koordinatenartige Aufbau des Bildschirmes in Form von Zeilen und Spalten ausnutzen. Besonders einfach läßt sich diese Auswertung durchführen, wenn im Rechner ein Framegrabber vorhanden ist, in welchem das Bild vollständig im Speicher abgelegt wird, so daß auf die Farbinformation einzelner Bildpunkte zu ihrer Verarbeitung separat zugegriffen werden kann.

Besonders vorteilhaft bei der erfindungsmäßigen Anordnung ist, daß im Alarmfall der Vorgang automatisch unterbrochen wird, da ein Mensch nicht so schnell reagieren kann. Bei dem Verfahren der e.g. Art ist es notwendig, ständig den Abrißpunkt über Stunden zu beobachten und gegebenenfalls rasch zu reagieren, wenn sich der Abrißpunkt verschiebt, da sonst der ganze Trennvorgang wiederholt werden muß. Wegen der langen menschlichen Reaktionszeit sind reine Fraktionen im Falle einer Störung praktisch nicht zu erhalten.

Vorteilhaft ist das Verfahren deshalb so ausgestaltet, daß bei Störungen der Sortiervorgang nahezu verzögerungsfrei unterbrochen werden kann.

Vorteilhaft sind bei der erfindungsgemäßen Anordnung Aktionsmittel in Form einer Alarmeinrichtung vorgesehen, um Unregelmäßigkeiten in den abreißenden Flüssigkeitstrahlen anzuzeigen.

Besonders vorteilhaft ist als Aktionsmittel bei der erfindungsgemäßen Anordnung ein Nachregulieren der Lage des Abrißpunkts durch einen Aktor vorgesehen, da häufig ein automatisiertes Nachregeln schwieriger ist, als Unterbrechung des Vorgangs, die Auslösung eines Alarms und die Korrektur der äußeren Parameter durch einen Bediener.

Besonders vorteilhaft wird die erfindungsgemaße Anordnung in einem Zell-Sorter eingesetzt, da hier bislang sehr zeitaufwendige Beobachtungen durch einen menschlichen Bediener erforderlich sind um den Trennvorgang zu überwachen.

Besonders vorteilhaft wird beim erfindungsgemäßen Verfahren die Position eines Abrißpunkts, bei welchem sich Einzeltropfen von einem Flüssigkeitstrahl ablösen, überwacht und deren Position mit Hilfe einer Bildanalyse des aufgenommenen Bildes ermittelt, denn diese Position kann gut überwacht werden und eine Überschreitung eines vordefinierten Positionsgrenzwertes führt zu definierten Aktionsbedingungen für das erfindungsgemäße Verfahren.

Besonders vorteilhaft wird beim erfindungsgemäßen Verfahren die Richtung des Flüssigkeitstrahls im aufgenommenen Bild dadurch ermittelt, daß das Bild zeilen- bzw. spaltenweise analysiert wird. Das erfindungsgemäße Verfahren nutzt dabei vorteilhaft aus, daß ein Flüssigkeitsstrahl im wesentlichen eine Gerade auf dem Bildschirm darstellt, und daß sich durch zeilen- bzw. spaltenhafte Bildanalyse der Farbgebung der einzelnen Pixelwerte die Verlaufrichtung des Strahls genau herausfinden läßt. Weiterhin nutzt es das erfindungsgemäße Verfahren vorteilhaft aus, daß der Strahl an einer Bildseite kontinuierlich eintritt und daß hernach, nach Abtrennung der einzelnen Tropfen von dem Abrißpunkt Unterbrechungen im Strahl vorhanden sind, so läßt sich genau die Position des Abrißpunkts detektieren, indem die Farbwerte der einzelnen Pixel entlang der Symmetrieachse des Strahls untersucht werden. Bei der ersten signifikanten Farbänderung ist die Position des Abrißpunkts im Bild gefunden worden und die Koordinaten dieser Pixelwerte repräsentieren im Rechner die Position des Abrißpunkts. Beim Start des erfindungsgemäßen Verfahrens kann der abreißende Flüssigkeitstrahl genau auf diesen Werten normiert werden und somit der Positionsgrenzwert des Abrißpunkts entsprechend relativ dazu definiert werden.

Besonders vorteilhaft wird beim erfindungsgemäßen Verfahren ein kleines Auswertungsfenster gebildet, welches symmetrisch um den Abrißpunkt herum angeordnet ist, denn so läßt sich der Bildanalyseaufwand wesentlich verringern.

Besonders vorteilhaft wird die Bildinformation des aufgenommenen Momentbildes mittels zweier Farbwerte diskretisiert, welche beispielsweise durch spalten- oder zeilenweise Mittelwertbildung gefunden werden. Dabei werden alle Farbwerte unterhalb des Minimums beispielsweise schwarz und alle Farbwerte oberhalb des Minimums beispielsweise weiß gewählt, so daß auf diese Weise weiterhin der Bildanalyseaufwand reduziert werden kann und damit abreißende Flüssigkeitstrahlen mit hoher Tropfenfolge überwacht werden können bzw. ein leistungsschwächerer Rechner für die Anwendung des Verfahrens verwendet werden kann.

Im folgenden wird die Erfindung anhand von Figuren weiter erläutert.
- Figur 1: gibt dabei ein Beispiel der Anwendung einer erfindungsgemäßen Anordnung in einem Zellsorter an.
- Figur 2 und Figur 3: zeigen ein Momentanbild eines aufgenommenen abreißenden Flüssigkeitstrahls.
- Figur 4: gibt ein Beispiel für ein Ablaufdiagramm eines erfindungsgemäßen Verfahrens an.

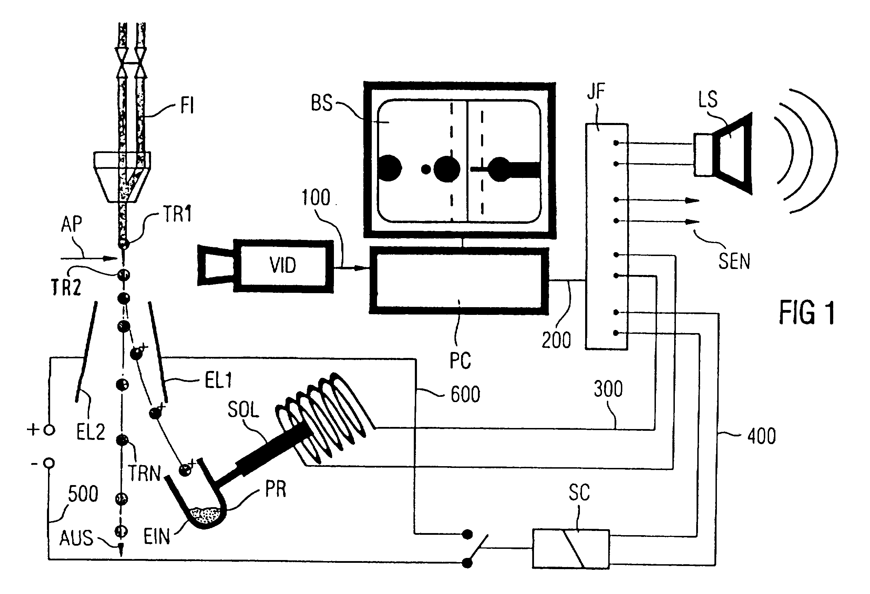

Figur 1 zeigt stark schematisiert die Anwendung einer erfindungsgemäßen Anordnung in einem Zellsorter. Besondere Bestandteile der Anordnung, die zu beachten sind, bestehen in einem freien Flüssigkeitstrahl FL, aus der sich ein Tropfen TR1 ablöst und der einen Abrißpunkt AP bildet. Der zweite Tropfen TR2 ist der erste Tropfen welcher sich von der Abrißpunkt AP abgelöst hat. Dieser Vorgang wird mittels einer Kamera oder einem anderen Detektor VID beobachtet, welche ihre Signale an eine Verarbeitungseinheit über eine Leitung 100 weitergeben. Diese Verarbeitungseinheit ist mit PC bezeichnet und kann beispielsweise einen Rechner darstellen, oder eine andere Hardware, welche dazu dient, das Signal des Detektors auszuwerten. Es sind noch weitere Tropfen dargestellt die bis zu TRN numeriert sind.

In einem Zellsorter werden vereinzelte biologische Zellen oder andere Partikel in einer elektrisch leitenden Suspension auf geeignete Weise durch optische oder elektrische Mittel charakterisiert und entsprechend ihrer Eigenschaften voneinander sortiert. Sie befinden sich nach Austritt aus einer Düse aufeinanderfolgend im Flüssigkeitsstrahl FL. Die sich aus dem Flüssigkeitstrahl FL ablösenden Tropfen werden durch ein elektrisches Feld zwischen den Elektroden EL1 und EL2 geführt, so daß elektrisch geladene Teilchen in ein Probenrohr PR abgelenkt werden. Die Tropfen werden beim Abriß vom Flüssigkeitsstrahl FL durch die augenblickliche elektrische Ladung des Flüssigkeitstrahls FL aufgeladen. Die Ladung des Flüssigkeitsstrahls richtet sich nach den Sort-Kriterien, die durch die optischen bzw. elektrischen Eigenschaften der zu sortierenden Partikel festgelegt wurden.

Die Auswertemittel PC sind hier beispielsweise mit einem Bildschirm BS verbunden, auf welchem der Abrißpunkt AP dargestellt ist. In den Auswertemitteln PC, welche beispielsweise ein Personalcomputer sein können wird ausgewertet, inwieweit sich die Abrißkante oder der Abrißpunkt AP verschieben. Hierzu wird zunächst beispielsweise von einem menschlichen Bediener ein korrekter abreißender Flüssigkeitstrahl eingestellt, der sich im wesentlichen zeitlich und örtlich stabil vom Abrißpunkt AP ablöst. Darauf wird beispielsweise die gesamte Anordnung normiert und ein Sicherheitsabstand als Postionsgrenze für den Abrißpunkt festgelegt. Falls nun während des Ablöseprozesses sich der Abrißpunkt AP verschiebt, so wird dies am Bildschirm dargestellt und bei Überschreiten eines vorher festgelegten Grenzwertes wird über beispielsweise eine Leitung 200 zu einem Interface IF ein Aktionsmittel betätigt. Dieses Aktionsmittel ist beispielsweise ein Lautsprecher LS, ein Funkalarm SEN, oder Magnetventile, die den Flüssigkeitstrahl FL unterbrechen. Ein weiteres Aktionsmittel kann beispielsweise ein Solenoid SOL sein, welches mittels eines Elektromagneten, der über die Leitungen 300 betätigt wird, das Probenglas PR aus dem Probenstrahl der Richtung EIN entfernt.

Es ist zu beachten, daß die hier gezeigte Version eines Zellsorters nur ein Beispiel für die Anwendung einer erfindungsgemäßen Anordnung darstellt. Die Vorgänge sind stark schematisiert dargestellt und es sind auch durchaus andere Detektoren VID denkbar. Solche Detektoren können beispielsweise Lichtschranken, Ultraschall oder kapazitive Aufnehmer sein. Durch diese Detektionsmittel muß lediglich sichergestellt werden, daß die Position eines Abrißpunkts AP hinreichend genau detektiert werden kann. Bei Zellsortern sind vorzugsweise Kameras zu verwenden, da diese bereits vorgesehen sind, um dem menschlichen Bediener das Beobachten des Abrißpunktes auf einem Bildschirm BS zu ermöglichen. Vorzugsweise wird bei der Erfindung deshalb in den Auswertenmitteln der Bildschirminhalt mittels einer Bildanalyse ausgewertet. Hierzu werden beispielsweise Momentaufnahmen des abreißenden Flüssigkeitstrahls erstellt und gemäß dem erfindungsgemäßen Verfahren durch zeilenweise und spaltenweise Analyse der einzelnen Pixelfarbwerte die Position der Abrißpunkt AP gefunden. Durch geeignete Maßnahmen, wie beispielsweise der Diskretisierung der Pixelfarbwerte in lediglich zwei Werte, welche einer Kontrastverstärkung gleich kommt wird auch der Rechenaufwand innerhalb der Auswertemittel PC vereinfacht. Damit ist es möglich, leistungsschwächere Prozessoren einzusetzen, bzw. eine höhere Tropffrequenz zu beobachten. Je nach gewünschter Auflösung kann das erfindungsgemäße Verfahren in Realzeit durchgeführt werden oder lediglich einzelne Tropfen können stroboskopartig mit den Momentaufnahmen in beispielsweise einem Framegrabber im PC abgebildet werden, so daß beispielsweise der Abrißpunkt nur bei jedem zehnten Tropfenvorgang abgelichtet wird. Für die Auswahl dieser Auflösung spielen die Kosten und die gewünschte Auflösung bei der Anwendung des erfindungsgemäßen Verfahrens und der erfindungsgemäßen Anordnung eine Rolle, denn mit steigender Auflösung wird der Rechenaufwand größer und damit steigen auch die Kosten für die Auswertemittel.

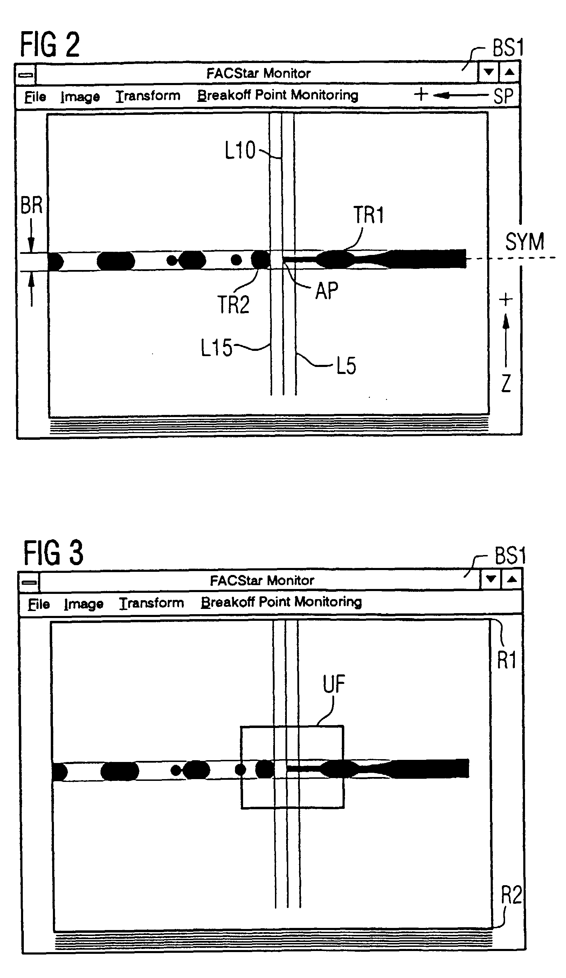

Figur 2 gibt ein Beispiel eines Bildschirmausschnittes, des Bildschirmes BS aus Figur 1 an. Bei dem Bildschirm handelt es sich beispielsweise um einen Rasterbildschirm der in Zeilen Z und Spalten SP aufgeteilt ist. Der Flüssigkeitstrahl tritt beispielsweise hier von rechts entlang einer Symmetrieachse SYM in positive Spaltenrichtung SP in den Bildschirm BS1 ein. Die Abrißpunkt AP ist hier mittels einer Linie L10 markiert. Auch hier ist wieder der Tropfen TR1 wie in Figur 1 dargestellt. Deutlich sind auf dem Bild BS1 Positionsgrenzwerte für den Abrißpunkt, L15 und L5 zu erkennen. Vorzugsweise werden diese Positionsgrenzwerte so gewählt, daß sie einen Abstand proportional zum Tropfenabstand vom Abrißpunkt AP aufweisen. Da es sich bei einem Ablösevorgang im wesentlichen um einen strahlförmigen Prozeß entlang der Symmetrieachse SYM handelt, bietet es sich beim erfindungsgemäßen Verfahren vorzugsweise an, lediglich Bildinhalte entlang dieses Strahls zu untersuchen. Hierzu ist beispielsweise um die Symmetrieachse herum ein Bereich der Breite BR gewählt. Dieser Bereich ist hier in positiver Spaltenrichtung als weißes Band zu erkennen.

Vorzugsweise wird beim erfindungsgemäßen Verfahren zur Detektion des Abrißpunkts mittels Bildanalyse wie folgt vorgegangen:
Zur Auffindung der Position der Symmetrielinie wird je nach Verlauf des Flüssigkeitsstrahls über das Bild entweder zeilenweise oder spaltenweise je Spalte oder je Zeile die Position der größten Schwärzung oder bei einem Inversbild der größten Weißfärbung gesucht und damit die Symmetrieeigenschaften des Flüssigkeitsstrahles ausgenutzt, da bekannt ist, daß ein Tropfen im Vergleich zum gesamten Bildschirminhalt eine kleine Ausdehnung besitzt und daß der Strahl entlang einer Symmetrieachse verläuft. Durch die Analyse der einzelnen Zeilen- bzw. Spalteninhalte erhält man eine Folge von Pixelkoordinaten, welche eine erhöhte Schwärzung oder eine erhöhte Weißfärbung aufweisen. Bei mehreren Pixelwerten entlang einer Zeile, bzw. Spalte kann das Minimum bzw. der signifikanteste Pixelwert durch Mittelwertbildung der einzelnen Koordinatenwerte der Pixel gefunden werden. Auf diese Weise werden entlang der Symmetrieachse verschiedene Punkte gefunden, welche den Verlauf des Flüssigkeitsstrahls angeben und insbesondere den Verlauf der Symmetrieachse SYM angeben. Zur weiteren Durchführung des erfindungsgemäßen Verfahrens können vorzugsweise entlang der Symmetrieachse die Farbwerte der einzelnen Bildschirmpixel diskretisiert werden. Um den Analyseaufwand bei der Durchführung des erfindungsgemäßen Verfahrens zu erleichtern, werden den einzelnen Pixeln vorzugsweise lediglich zwei Farben, beispielsweise schwarz und weiß zugewiesen. Zur Diskretisierung dieser beiden Farbwerte, d. h. zur Findung einer Schranke, welche weiß von schwarz unterscheidet, werden beispielsweise entlang der Symmetrieachse alle Farbwerte aufintegriert und durch die Anzahl der Zeilen bzw. Spalten dividiert, so daß man genau einen Mittelwert für die gesamten Farbwerte erhält. Dieser Mittelwert dient dann infolge beispielsweise als Schranke zur Unterscheidung zwischen schwarz und weiß. Dabei erhalten alle Farbwerte, die unterhalb des Mittelwerts liegen den Wert schwarz und alle die oberhalb des Mittelwerts liegen beispielsweise den Wert weiß zugewiesen. Dieselbe Vorgehensweise läßt sich zur weiteren Vereinfachung der Bildinformation auch in der jeweils anderen also bei Zeilen/Spaltenrichtung und bei Spalten-/Zeilenrichtung durchführen. Nachdem nun der Tropfenstrahl auf diese Art und Weise aufbereitet wurde, kann mit dem erfindungsgemäßen Verfahren der Abrißpunkt AP gesucht werden. Hierzu wird vorausgesetzt, daß die Eintrittsrichtung des Flüssigkeitsstrahls in das Bild bekannt ist. Ausgehend von diesem Bildrand wird dann mit dem erfindungsgemäßen Verfahren entlang der Symmetrieachse die Pixelkoordinate gesucht, an der der Farbwert wechselt. Diese Pixelkoordinaten repräsentieren genau den Ort des Abrißpunkts AP. Ausgehend von diesem aktuellen Pixelwert werden beispielsweise die Positionsgrenzwerte für den Abrißpunkt L15 und L5 vorzugsweise im Abstand proportional zum Tropfenabstand vom Abrißpunkt definiert. Mit diesen Positionsgrenzwerten sind bestimmte Pixelkoordinaten verbunden. Das erfindungsgemäße Verfahren kann nun zyklisch durchgeführt werden und es wird immer durch die erfindungsgemäße Vorgehensweise der Abrißpunkt gefunden. Falls der Abrißpunkt AP einen der Grenzwerte L15 oder L5 erreicht, das bedeutet, daß der Koordinatenwert des Abrißpunkts AP entweder L5 oder L15 annimmt, dann können beispielsweise geeignete Maßnahmen eingeleitet werden um die Position des Abrißpunkts AP zu korrigieren. Mit einer solchen Maßnahme kann beispielsweise der Vorgang sofort unterbrochen werden und durch einen Alarm ein menschlicher Bediener gerufen werden, oder es können geeignete Automatiken aktiviert werden um den Abrißpunkt in die richtige Position zurückzuführen.

Figur 3 zeigt ebenfalls den Bildschirmausschnitt BS1, welcher in Figur 2 dargestellt wurde. In Figur 3 ist ein Überwachungsfenster UF dargestellt, welches nach Auffindung des Abrißpunkts AP, wie das in Figur 2 beschrieben wurde, um den Abrißpunkt AP herum definiert werden kann. Wie erkannt werden kann, nimmt das Überwachungsfenster UF als Fläche einen wesentlich kleineren Teil als der gesamte Bildschirm ein, beispielsweise 5% des Bildschirminhaltes, was bedeutet, daß die Analyse nach dem erfindungsgemäßen Verfahren wesentlich schneller und in einem kürzeren Zeitraum durchgeführt werden kann, ohne das dabei Informationen verloren gehen. Es wird also davon ausgegangen, daß das erfindungsgemäße Verfahren beispielsweise lediglich innerhalb des Überwachungsfensters UF durchgeführt wird. Es kann weiterhin vorgesehen sein, Schranken R1 und R2 vorzusehen, welche den unteren und den oberen Bildschirmrand repräsentieren, um damit eine Drift der Symmetrieachse SYM zu gestatten und lediglich bei Überschreiten dieser Grenzwerte R1 und R2 durch die Symmetrieachse SYM geeignete Maßnahmen einzuleiten um diese wieder zu zentrieren.

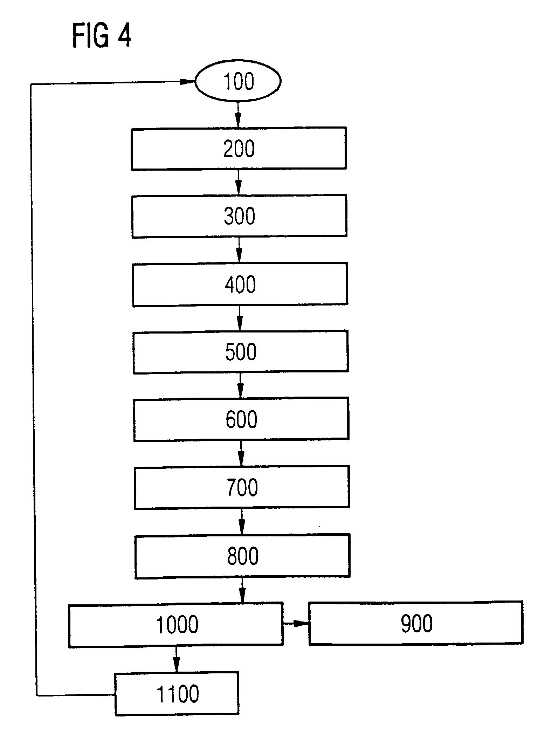

Figur 4 gibt ein Beispiel eines Ablaufdiagrammes für ein zyklisch durchgeführtes erfindungsgemäßes Verfahren an. Im Schritt 100 des erfindungsgemäßen Verfahrens wird beispielsweise der Meßzyklus gestartet. Im Schritt 200 wird beispielsweise die Summe S(x, y) der Pixelfarbwerte der Spalten bzw. Zeilen im Bild berechnet. In einem Schritt 300 wird beispielsweise der Mittelwert der gefundenen Farbwerte gebildet, um die einzelnen Pixelfarbwerte in zwei Farben diskriminieren zu können. Auf diese Weise wird ein Farbverlauf quer über den Bildschirm in horizontaler oder waagrechter Richtung erhalten. In einem Schritt 400 wird dieser Farbverlauf differenziert und damit die Stelle des Minimums bzw. Maximums gefunden. Dieser Maximal- oder Minimaldurchgang repräsentiert die Position der Symmetrielinie SYM. Anschließend wird beispielsweise in einem Schritt 500 der proportionale Tropfenabstand vom Abrißpunkt bestimmt. Dieser entspricht der in Figur 2 und Figur 3 dargestellten Kanalbreite BR. Diese Kanalbreite ergibt sich aus dem Farbverlauf dadurch, daß die Differenz zwischen dem Maximum bzw. Minimum und dem Nulldurchgang der Funktion gebildet wird. Dieser Abstand stellt ein sinnvolles Maß zur Beschränkung des Beobachtungsraums bei der Bildanalyse dar. Weiterhin gibt sie ein gutes Maß an, für die Bestimmung der Positionsgrenzwerte für den Abrißpunkt. Dieses Abstandsmaß wird beispielsweise zur Festlegung der Schranken L5 und L15 verwendet. Und zwar werden diese Schranken so gewählt, daß sie einen Abstand vom Abrißpunkt proportional zum Tropfenabstand haben.

In einem Schritt 600 wird beispielsweise der mittlere Grauwert auf der Symmetrielinie gefunden, indem die einzelnen Pixelfarbwerte aufaddiert werden und durch die Anzahl der Spalten bzw. Zeilen dividiert wird. In einem weiteren Schritt 700 findet die Binarisierung des Bildausschnittes statt. Als Schwellenwert für die Binarisierung dient der mittlere Grauwert. In einem Schritt 800 wird die Berechnung der Summe der Farbwerte im binarisierten Bildausschnitt durchgeführt. Hierzu wird durch das erfindungsgemäße Verfahren die Summenbildung von dem Bildrand aus durchgeführt, an dem der kontinuierliche Flüssigkeitsstrahl, d. h. die Flüssigkeitssäule in das Bild eintritt. Der Abrißpunkt wird gefunden, wenn eine Spalte oder eine Zeile auftritt, die zur Summe nichts mehr beiträgt. Vorzugsweise kann auch die spalten- bzw. zeilenweise Änderung der Summe beobachtet werden, d. h. die Summenfunktion kann differenziert werden und bei Auftreten eines ersten Minimums ist der Ort des Abrißpunktes gefunden. In einem Schritt 1000 des erfindungsgemäßen Verfahrens wird dann überprüft, ob die Positionsgrenze L15 oder L5 durch die Position des Abrißpunktes erreicht wurde. Falls ja wird in einem Schritt 900 eine geeignete Maßnahme eingeleitet. Falls nein wird in einem Schritt 1100 ein neuer Meßzyklus angestoßen.

## Patentansprüche

1. Anordnung zur Überwachung eines abreißenden Flüssigkeitstrahls,
a) bei der Detektionsmittel vorgesehen sind zur Detektion der variablen Position eines Abrißpunkts, an welchem sich Einzeltropfen von einer Flüssigkeitssäule ablösen,
b) bei der Auswertemittel vorgesehen sind zur Auswertung der detektierten Position des Abrißpunkts in Abhängigkeit mindestens eines vorgegebenen Positionsgrenzwertes, indem die detektierte Position mit dem mindestens einen Positionsgrenzwert verglichen wird,
c) und bei der ein Aktionsmittel vorgesehen ist, welches bei Über- bzw. Unterschreiten des mindestens einen Positionsgrenzwertes in Aktion tritt.

2. Anordnung nach Anspruch 1,
bei der Detektionsmittel in Form einer Überwachungskamera vorgesehen sind, welche mit geeigneten Bildspeichermitteln zum Festhalten mindestens einer Momentaufnahme des Abrißpunkts zusammenwirken.

3. Anordnung nach einem der Ansprüche 1 oder 2,
bei der Auswertemittel in Form eines Rechners vorgesehen sind.

4. Anordnung nach Anspruch 2 und 3,
bei welcher der Rechner eine Graphikkarte mit Frame-Grabber aufweist und die Auswertemittel so ausgestaltet sind, daß eine graphische Auswertung des Positionsgrenzwertes anhand der als Momentbild gespeicherten Pixelinformation durchgeführt wird, wobei der Positionsgrenzwert in Form von Pixelkoordinatenwerten vorgegeben ist.

5. Anordnung nach einem der vorangehenden Ansprüche,
bei der Aktionsmittel in Form einer Alarmeinrichtung vorgesehen sind.

6. Anordnung nach einem der Ansprüche 1 bis 4, bei denen Aktionsmittel vorgesehen sind, welche den Flüssigkeisstrahl automatisch unterbrechen.

7. Anordnung nach einem der Ansprüche 1 bis 4,
bei der als Aktionsmittel ein Aktor vorgesehen ist, welcher den Abrißpunkt nachreguliert.

8. Anordnung nach einem der vorangehenden Ansprüche,
bei der Abrißpunkt des Flüssigkeitsstrahl bei einem Zell sorter überwacht wird.

9. Verfahren zur Überwachung eines abreißenden Flüssigkeitstrahls,
a) bei dem das Bild eines Abrißpunktes erfaßt wird, an welchem sich Einzeltropfen von einer Flüssigkeitssäule ablösen,
b) bei dem mittels Bildanalyse die Position des Abrißpunktes auf dem Bild ermittelt wird,
c) bei dem die ermittelte Position des Abrißpunktes mit mindestens einem Grenzwert für die Position verglichen wird,
d) und bei dem in Abhängigkeit davon, ob der Grenzwert über- bzw. unterschritten wird, eine Maßnahme eingeleitet wird.

10. Verfahren nach Anspruch 9,
a) bei dem zur Bildanaylse die Tropfrichtung ermittelt wird, indem die Pixelinformation des Bildes zeilen- bzw. spaltenweise auf Orte höherer Färbung hin untersucht wird und diese Orte nach einer Mittelwertbildung durch eine Gerade verbunden werden, welche so die Symmetrielinie des Tropfenstrahls bildet,
b) und bei dem entlang der Symmetrielinie, bei der bekannten Eintrittsseite der Flüssigkeitssäule in das Bild beginnend und zur anderen Bildseite fortschreitend, ein Ort geringerer Färbung gesucht wird und dieser als die Position der Abrißkante auf dem Bild ermittelt wird.

11. Verfahren nach einem der Ansprüche 9 oder 10,
bei dem um die Abrißkante herum ein Suchfenster definiert wird, welches wesentlich kleiner ist, als die Bildfläche.

12. Verfahren nach einem der Ansprüche 9 bis 11,
bei dem in Zeilen- und/oder Spaltenrichtung des Bildes ein Extremwert der Pixelfarbwerte bestimmt wird und den Farbwerten der Pixel lediglich zwei diskrete Werte zugewiesen erden, zu deren Unterschreitung bei der Zuweisung der Extremwerte verwendet wird, so daß alle Werte die darüber, bzw. darunter liegen den einen Farbwerte erhalten und alle anderen Werte in der jeweiligen Zeile bzw. Spalte den anderen Farbwert erhalten.

13. Verfahren nach einem der Ansprüche 9 bis 12,
bei dem als Maßnahme der Flüssigkeitsstrahl unterbrochen wird.

14. Verfahren nach einem der Ansprüche 9 bis 13,
bei dem als Maßnahme ein Sortierröhrchen aus einem Tröpfchenstrahl entfernt wird.

## Claims

1. Arrangement for monitoring a liquid jet at the break-off point,
a) in which detection means are provided for detecting the variable position of a break-off point at which individual drops separate from a liquid column,
b) in which evaluation means are provided for evaluating the detected position of the break-off point in a manner dependent on at least one predetermined position limit value, by the detected position being compared with the at least one position limit value,
c) and in which an action means is provided which starts acting when the at least one position limit value is exceeded or undershot.

2. Arrangement according to Claim 1,
in which detection means in the form of a monitoring camera are provided, which interact with suitable image-storing means for capturing at least one snapshot of the break-off point.

3. Arrangement according to either of Claims 1 and 2,
in which evaluation means in the form of a computer are provided.

4. Arrangement according to Claims 2 and 3,
in which the computer has a graphics card with a frame grabber and the evaluation means are configured in such a way that a graphical evaluation of the position limit value using the pixel information stored as a snapshot image is carried out, the position limit value being predetermined in the form of pixel coordinate values.

5. Arrangement according to one of the preceding claims,
in which action means in the form of an alarm device are provided.

6. Arrangement according to one of Claims 1 to 4, in which action means are provided which automatically interrupt the liquid jet.

7. Arrangement according to one of Claims 1 to 4,
in which an actuator which readjusts the break-off point is provided as the action means.

8. Arrangement according to one of the preceding claims,
in which the break-off point of the liquid jet is monitored in a cell sorter.

9. Method for monitoring a liquid jet at the break-off point,
a) in which the image of a break-off point at which individual drops separate from a liquid column is acquired,
b) in which the position of the break-off point on the image is determined by means of image analysis,
c) in which the determined position of the break-off point is compared with at least one limit value for the position,
d) and in which a measure is initiated in a manner dependent on whether the limit value is exceeded or undershot.

10. Method according to Claim 9,
a) in which, for the image analysis, the dripping direction is determined by the pixel information of the image being examined line-by-line and/or column-by-column for locations of higher coloration and, after averaging, these locations are connected by a straight line which thus forms the line of symmetry of the jet of drops,
b) and in which a location of lower coloration is sought along the line of symmetry, starting at the known side at which the liquid column enters the image and progressing to the other side of the image, and this location is determined as the position of the break-off edge on the image.

11. Method according to either of Claims 9 and 10,
in which a search window is defined around the break-off edge, which search window is significantly smaller than the image area.

12. Method according to one of Claims 9 to 11,
in which an extremum of the pixel colour value is determined in the line and/or column direction of the image and just two discrete values are allocated to the colour values of the pixels, the undershooting of which discrete values is used in the allocation of the extrema, so that all values which lie above the latter, or below the latter, are given one of the colour values and all other values in the respective line and/or column are given the other colour value.

13. Method according to one of Claims 9 to 12,
in which, as the measure, the liquid jet is interrupted.

14. Method according to one of Claims 9 to 13,
in which, as the measure, a small sorting tube is removed from a jet of droplets.

## Revendications

1. Dispositif de surveillance de la formation de gouttes à partir d'un jet de liquide,
a) dans lequel il est prévu des moyens de détection de la position variable d'un point de détachement où des gouttes individuelles se séparent d'une colonne de liquide,
b) dans lequel il est prévu des moyens d'exploitation de la position détectée du point de détachement en fonction d'au moins une valeur limite de position prescrite en comparant la position détectée à au moins une valeur limite de position,
c) et dans lequel il est prévu un moyen d'action qui entre en action si l'on passe au-delà ou en-deçà d'au moins une valeur limite de position.

2. Dispositif suivant la revendication 1,
dans lequel il est prévu des moyens de détection sous la forme d'une caméra de surveillance qui coopèrent avec des moyens de mémorisation d'image appropriés pour maintenir au moins une prise de vue instantanée du point de détachement.

3. Dispositif suivant l'une des revendications 1 ou 2,
dans lequel il est prévu des moyens d'exploitation sous la forme d'un ordinateur.

4. Dispositif suivant les revendications 2 et 3,
dans lequel l'ordinateur comporte une carte graphique à numériseur et les moyens d'exploitation sont constitués de manière à effectuer une exploitation graphique de la valeur limite de position au moyen de l'information de pixels mémorisée sous la forme d'une image instantanée, la valeur limite de position étant prescrite sous la forme de valeur de coordonnées de pixels.

5. Dispositif suivant l'une des revendications précédentes,
dans lequel le moyen d'action est prévu sous la forme d'un dispositif d'alerte.

6. Dispositif suivant l'une des revendications 1 à 4,
dans lequel il est prévu un moyen d'action qui interrompt automatiquement le jet de liquide.

7. Dispositif suivant l'une des revendications 1 à 4,
dans lequel il est prévu comme moyen d'action un actionneur qui règle le point de détachement

8. Dispositif suivant l'une des revendications précédentes,
dans lequel le point de détachement du jet de liquide est surveillé dans un trieur de cellules.

9. Procédé de surveillance de la formation de gouttes à partir d'un jet de liquide,
a) dans lequel on relève l'image d'un point de détachement où des gouttes individuelles se séparent d'une colonne de liquide,
b) dans lequel on détermine au moyen d'une analyse d'image la position du point de détachement sur l'image,
c) dans lequel on compare la position déterminée du point de détachement à au moins une valeur limite de la position,
d) et dans lequel on prend une mesure si l'on est en-deçà ou au-delà de la valeur limite.

10. Procédé suivant la revendication 9,
a) dans lequel on détermine pour l'analyse d'image la direction des gouttes en étudiant l'information de pixels de l'image ligne par ligne ou colonne par colonne aux emplacements de plus grande coloration et on relie ces emplacements suivant une formation de moyenne par une droite qui forme ainsi la ligne de symétrie du jet de gouttes,
b) et dans lequel on recherche le long de la ligne de symétrie commençant au côté d'entrée connu de la colonne de liquide dans l'image et se poursuivant vers l'autre côté de l'image, un emplacement de moindre coloration et on prend celui-ci comme étant la position du bord de détachement sur l'image.

11. Procédé suivant l'une des revendications 9 ou 10,
dans lequel il est défini autour du bord de détachement une fenêtre de recherche qui est sensiblement plus petite que la surface de l'image.

12. Procédé suivant l'une des revendications 9 à 11,
dans lequel on détermine, dans la direction des lignes et/ou des colonnes de l'image une valeur extrême des valeurs chromatiques de pixels et on attribue aux valeurs chromatiques des pixels seulement deux valeurs discrètes que l'on utilise pour le passage en-dessous d'un seuil lors de l'attribution des valeurs extrêmes, de sorte que toutes les valeurs qui sont au-dessus ou en-dessous reçoivent une valeur chromatique et toutes les autres valeurs dans les lignes ou colonnes respectives, l'autre valeur chromatique.

13. Procédé suivant l'une des revendications 9 à 12,
dans lequel on prend comme mesure l'interruption du jet de liquide.

14. Procédé suivant l'une des revendications 9 à 13,
dans lequel on prend comme mesure l'éloignement d'un tube de tri d'un jet de gouttes.
